# EUROPEAN PATENT APPLICATION

(11) **EP 3 392 871 A1**
(43) Date of publication of application: **24.10.2018**
(21) Application number: 16881022.4
(22) Date of filing: 20.12.2016
(51) Int. Cl.: G09G 3/36, G02F 1/13

(54) **DISPLAY DRIVE APPARATUS AND DISPLAY DRIVE METHOD**

(30) Priority: 31.12.2015 CN 201511032105
(71) Applicant: Huawei Technologies Co., Ltd., Longgang District Shenzhen, Guangdong 518129 (CN)
(72) Inventor: XU, Jingxiang, Shenzhen Guangdong 518129 (CN); LUO, Tianyi, Shenzhen Guangdong 518129 (CN); LIU, Jun, Shenzhen Guangdong 518129 (CN); GUAN, Hengshun, Shenzhen Guangdong 518129 (CN); CAO, Bin, Shenzhen Guangdong 518129 (CN); GAN, Xialin, Shenzhen Guangdong 518129 (CN)
(74) Representative: Epping - Hermann - Fischer
(86) International application number: PCT/CN2016/111086
(87) International publication number: WO 2017/114233

(57) **Abstract**

The present invention provides a display driving apparatus and a display driving method. The display driving apparatus includes a compression and decompression unit, a storage unit, a data selection unit, and a display acceleration unit. When a current frame correlates with a preceding frame, and the current frame is dynamic relative to the preceding frame, the data selection unit obtains a compensated preceding frame by means of calculation according to the current frame, a decompressed current frame, and a decompressed preceding frame, and the display acceleration unit determines an overdrive value according to the compensated preceding frame and the current frame. It may be learned from the foregoing description that the compensated preceding frame is obtained by means of calculation, and the overdrive value is determined according to the compensated preceding frame and the current frame. No compression error is involved in an overdrive value determining process, that is, when the compression error is not considered, an overdrive mechanism may be still used to determine a grayscale value of a displayed pixel. Therefore, display quality of a dynamic image is improved.

## Description

This application claims priority to Chinese Patent Application No. 201511032105.6, filed with the Chinese Patent Office on December 31, 2015 and entitled "DISPLAY DRIVING APPARATUS AND DISPLAY DRIVING METHOD", which is incorporated herein by reference in its entirety.

### TECHNICAL FIELD

The present invention relates to display technologies, and in particular, to a display driving apparatus and a display driving method.

### BACKGROUND

Currently, liquid crystal displays (Liquid Crystal Display, LCD) have been widely applied. When an LCD displays image data, a drive voltage is provided to each pixel, so that liquid crystal molecules in the pixel rotate, to change pixel transmittance. Therefore, the pixel can display expected brightness and an expected color. A rotation speed and a rotation angle of the liquid crystal molecule are affected by a drive voltage difference, that is, a larger drive voltage difference indicates a higher rotation speed and a larger rotation angle of the liquid crystal molecule.

When a liquid crystal display panel displays a moving image, to meet a display rate and avoid image ghosting, an overdrive value (overdrive value) needs to be provided for a pixel. In this way, when the liquid crystal display panel displays a next frame of image, a liquid crystal molecule can rotate to another angle within a specific time, so as to increase a rotation speed of the liquid crystal molecule. Currently, an overdrive value of a pixel is in a lookup table (lookup table, LUT). The LUT records a correspondence between the overdrive value of the pixel and two grayscale values of the pixel in a current frame and a preceding frame. The correspondence is preset. The overdrive value is used as a grayscale value and is displayed on a liquid crystal display panel.

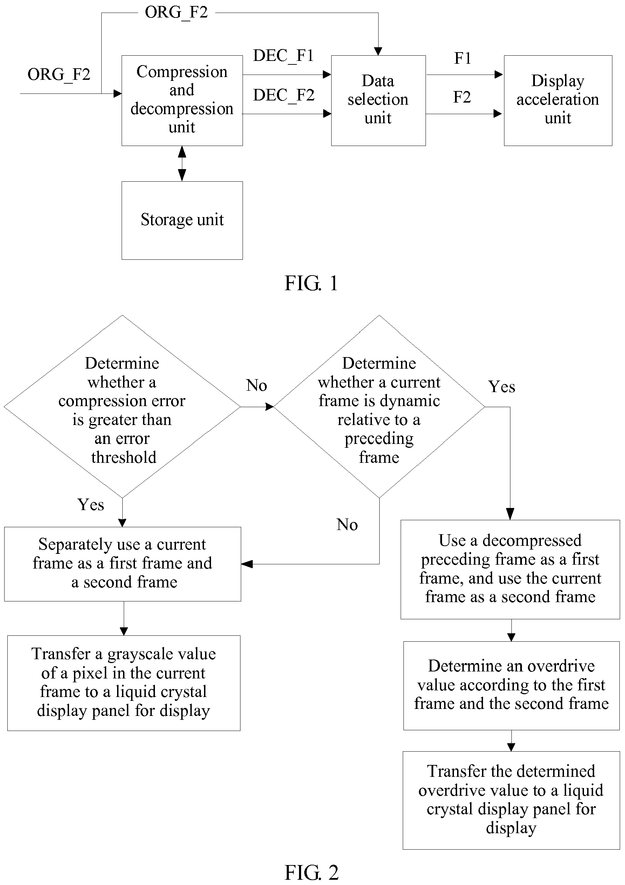

FIG. 1 shows a display driving apparatus in the prior art. The display apparatus includes a compression and decompression unit, a storage unit, a data selection unit, and a display acceleration unit. The compression and decompression unit receives a current frame ORG_F2, compresses the current frame ORG_F2 to obtain a compressed current frame COM_F2, and transfers the compressed current frame COM_F2 to the storage unit for storage. The storage unit stores the compressed current frame COM_F2. Obviously, the storage unit also stores a compressed preceding frame COM_F1. A preceding frame is a preceding frame of the current frame. The storage unit transfers the compressed preceding frame COM_F1 to the compression and decompression unit. The compression and decompression unit separately decompresses the compressed current frame COM F2 and the compressed preceding frame COM_F1 to obtain a decompressed current frame DEC_F2 and a decompressed preceding frame DEC_F1, and sends the decompressed current frame DEC_F2 and the decompressed preceding frame DEC_F1 to the data selection unit. In addition, the data selection unit also receives the current frame ORG_F2.

After obtaining the current frame ORG_F2, the decompressed current frame DEC_F2, and the decompressed preceding frame DEC_F1, the data selection unit calculates a compression error of the current frame according to the current frame ORG F2 and the decompressed current frame DEC_F2, and determines, according to the compression error of the current frame, a first frame F1 and a second frame F2 that are to be sent to the display acceleration unit. The first frame F1 and the second frame F2 each are one of the current frame ORG_F2, the decompressed current frame DEC_F2, or the decompressed preceding frame DEC_F1. The display acceleration unit determines an overdrive value according to the first frame F1 and the second frame F2.

FIG. 2 is a schematic flowchart of implementing display driving by the foregoing display driving apparatus. The data selection unit determines a compression error according to a current frame ORG_F2 and a decompressed current frame DEC_F2, and determines whether the compression error is greater than an error threshold. If the compression error of the current frame is greater than the error threshold, the data selection unit separately uses the current frame ORG_F2 as a first frame F1 and a second frame F2, and sends the first frame F1 and the second frame F2 to the display acceleration unit. Because in this case, the display acceleration unit receives data information of only the current frame, the display acceleration unit does not execute an overdrive mechanism, so as to avoid inaccuracy of an obtained overdrive value that is caused because the current frame has an excessively large compression error. That an overdrive mechanism is not executed means that the display acceleration unit directly transfers a grayscale value of a pixel in the current frame ORG_F2 to a liquid crystal display panel for display. If the compression error is not greater than the error threshold, it is determined whether the current frame is dynamic relative to a preceding frame. If the current frame is static relative to the preceding frame, the current frame ORG_F2 is separately used as a first frame F1 and a second frame F2, and the first frame F1 and the second frame F2 are sent to the display acceleration unit, and the display acceleration unit does not execute an overdrive mechanism. If the current frame is dynamic relative to the preceding frame, a decompressed preceding frame DEC_F1 is used as a first frame F1 and the current frame ORG_F2 is used as a second frame F2, and the first frame F1 and the second frame F2 are sent to the display acceleration unit, and the display acceleration unit determines an overdrive value according to the first frame and the second frame. Specifically, the display acceleration unit determines, by using a lookup table circuit, an overdrive value corresponding to two grayscale values of a pixel in the first frame F1 and the second frame F2, and the display acceleration unit transfers the determined overdrive value to a liquid crystal display panel for display.

It may be learned from the prior art that when a compression error is greater than a threshold, that is, when the compression error is relatively large, a display acceleration unit does not execute an overdrive mechanism, and in this case, the display acceleration unit directly transfers a grayscale value of a pixel in a current frame ORG_F2 to a liquid crystal display panel for display. Consequently, display quality is low when the liquid crystal display panel displays a dynamic image. Therefore, the display driving method provided in the prior art has a disadvantage.

### SUMMARY

According to a display driving apparatus and a display driving method that are provided in embodiments of the present invention, display quality of a dynamic image can be improved.

According to a first aspect, an embodiment of the present invention provides a display driving apparatus, including:
a compression and decompression unit, configured to: receive a current frame, compress the current frame to obtain a compressed current frame, and send the compressed current frame to a storage unit, and further configured to: separately decompress the compressed current frame and a compressed preceding frame that is obtained from the storage unit, to obtain a decompressed current frame and a decompressed preceding frame; and send the decompressed current frame and the decompressed preceding frame to a data selection unit;
the storage unit, configured to store the compressed current frame and the compressed preceding frame;
the data selection unit, configured to: receive the current frame, the decompressed current frame, and the decompressed preceding frame, determine a result of correlation between the current frame and a preceding frame and frame status information of the current frame relative to the preceding frame, and when the result of correlation is that the current frame correlates with the preceding frame, and the frame status information is a dynamic state, obtain a compensated preceding frame by means of calculation according to the current frame, the decompressed current frame, and the decompressed preceding frame, use the compensated preceding frame as a first frame, and use the current frame as a second frame, where
the data selection unit is further configured to send the first frame and the second frame to a display acceleration unit; and
the display acceleration unit, configured to determine an overdrive value according to the first frame and the second frame.

It may be learned from the first aspect that when the data selection unit determines that a current frame correlates with a preceding frame, and the current frame is dynamic relative to the preceding frame, a compensated preceding frame is obtained by means of calculation, and an overdrive value is determined according to the compensated preceding frame and the current frame. No compression error is involved in an overdrive value determining process, that is, when the compression error is not considered, an overdrive mechanism may be still used to determine a grayscale value of a displayed pixel. Therefore, display quality of a dynamic image is improved.

With reference to the first aspect, in a first implementation of the first aspect, the data selection unit includes:
a correlation determining unit, configured to determine the result of correlation between the current frame and the preceding frame according to the decompressed current frame and the decompressed preceding frame, where the result of correlation is that the current frame correlates with the preceding frame or the current frame does not correlate with the preceding frame;
a status determining unit, configured to compare the decompressed current frame with the decompressed preceding frame to determine the frame status information, where the frame status information is a dynamic state or a static state;
a calculation unit, configured to: when the result of correlation determined by the correlation determining unit is that the current frame correlates with the preceding frame, and the frame status information determined by the status determining unit is a dynamic state, calculate a difference between the current frame and the decompressed current frame, multiply the difference by an adjustment factor, and add a result of the multiplication and the decompressed preceding frame to obtain the compensated preceding frame, where the adjustment factor is used to indicate an adjustment amplitude of the difference, and a value of the adjustment factor is from 0 to 1; and
a frame determining unit, configured to: when the result of correlation determined by the correlation determining unit is that the current frame correlates with the preceding frame, and the frame status information determined by the status determining unit is a dynamic state, use the compensated preceding frame obtained by the calculation unit as the first frame, and use the current frame as the second frame.

With reference to the first implementation of the first aspect, in a second implementation of the first aspect, the correlation determining unit includes:
a correlation value calculation unit, configured to calculate a value of correlation between the decompressed current frame and the decompressed preceding frame; and
a correlation judgment unit, configured to compare the value of correlation calculated by the correlation value calculation unit with a preset correlation threshold to obtain the result of correlation, where if the value of correlation is greater than the correlation threshold, the result of correlation is that the current frame correlates with the preceding frame, or otherwise, the result of correlation is that the current frame does not correlate with the preceding frame.

With reference to the first or the second implementation of the first aspect, in a third implementation of the first aspect, the frame determining unit is further configured to:
when the result of correlation determined by the correlation determining unit is that the current frame does not correlate with the preceding frame, separately use the current frame as the first frame and the second frame.

With reference to the first or the second implementation of the first aspect, in a fourth implementation of the first aspect, the data selection unit further includes an error determining unit, where
the error determining unit is configured to obtain a compression error by calculating the difference between the current frame and the decompressed current frame, and compare the compression error with an error threshold to obtain an error result, where the error result is that the compression error is greater than the error threshold or the compression error is not greater than the error threshold; and
the frame determining unit is further configured to:
when the result of correlation determined by the correlation determining unit is that the current frame does not correlate with the preceding frame, the frame status information determined by the status determining unit is a dynamic state, and the error result determined by the error determining unit is that the compression error is greater than the error threshold, separately use the current frame as the first frame and the second frame; or
when the result of correlation determined by the correlation determining unit is that the current frame does not correlate with the preceding frame, the frame status information determined by the status determining unit is a dynamic state, and the error result determined by the error determining unit is that the compression error is not greater than the error threshold, use the decompressed preceding frame as the first frame, and use the current frame as the second frame.

It may be learned from the fourth implementation of the first aspect that when a current frame does not correlate with a preceding frame, whether a compression error is greater than an error threshold further needs to be determined. When the compression error is greater than the error threshold, that is, when the error is excessively large in an encoding and decoding process, the current frame is used as a first frame and a second frame, and finally, a grayscale value of a pixel in the current frame is directly output to a liquid crystal display panel for display. Therefore, a relatively large error of a determined overdrive value that is caused by an overdrive mechanism is avoided.

With reference to the first, the second, the third, or the fourth implementation of the first aspect, in a fifth implementation of the first aspect, the frame determining unit is further configured to:
when the frame status information determined by the status determining unit is a static state, separately use the current frame as the first frame and the second frame.

It may be learned from the fifth implementation of the first aspect that when the current frame is static relative to the preceding frame, the two frames are the same, and there is no need to use an overdrive mechanism.

With reference to the first, the second, the third, the fourth, or the fifth implementation of the first aspect, in a sixth implementation of the first aspect, the display acceleration unit includes a lookup table circuit, and the lookup table circuit is configured to determine, according to two grayscale values of a pixel in the first frame and the second frame, an overdrive value corresponding to the pixel.

With reference to the first aspect, in a seventh implementation of the first aspect, the compression and decompression unit includes a compression unit and a decompression unit, where
the compression unit is configured to: receive the current frame, compress the current frame to obtain the compressed current frame, send the compressed current frame to the decompression unit, and send the compressed current frame to the storage unit for storage; and
the decompression unit is configured to: receive the compressed current frame sent by the compression unit, decompress the compressed current frame to obtain the decompressed current frame, decompress the compressed preceding frame obtained from the storage unit to obtain the decompressed preceding frame, and send the decompressed current frame and the decompressed preceding frame to the data selection unit.

With reference to the first aspect, in an eighth implementation of the first aspect, the storage unit includes a storage module and a storage management module, where
the storage module is configured to store a compressed frame, where the compressed frame includes the compressed current frame and the compressed preceding frame; and
the storage management module is configured to perform storage management, so as to control writing of the compressed frame into the storage module or reading of the compressed frame from the storage module.

According to a second aspect, an embodiment of the present invention provides a display apparatus, and the display apparatus includes the display driving apparatus provided in the foregoing embodiment and a liquid crystal display panel, where
the liquid crystal display panel is configured to receive an overdrive value sent by the display driving apparatus, and display the overdrive value.

With reference to the second aspect, in a first implementation of the second aspect, the display apparatus further includes:
a timing controller TCON, configured to generate a current frame, and send the current frame to the display driving apparatus.

According to a third aspect, an embodiment of the present invention provides a display driving method, and the display driving method includes:
obtaining a current frame and a compressed preceding frame;
compressing the current frame to obtain a compressed current frame;
separately decompressing the compressed current frame and the compressed preceding frame to obtain a decompressed current frame and a decompressed preceding frame;
determining, according to the decompressed current frame and the decompressed preceding frame, whether the current frame correlates with the preceding frame;
when the current frame correlates with the preceding frame, and the current frame is dynamic relative to the preceding frame, obtaining a compensated preceding frame by means of calculation according to the current frame, the decompressed current frame, and the decompressed preceding frame; and
determining an overdrive value according to the compensated preceding frame and the current frame.

It may be learned from the third aspect that when it is determined that a current frame correlates with a preceding frame, and the current frame is dynamic relative to the preceding frame, a compensated preceding frame is obtained by means of calculation, and an overdrive value is determined according to the compensated preceding frame and the current frame. No compression error is involved in an overdrive value determining process, that is, when the compression error is not considered, an overdrive mechanism may be still used to determine a grayscale value of a displayed pixel. Therefore, display quality of a dynamic image is improved.

With reference to the third aspect, in a first implementation of the third aspect, the obtaining a compensated preceding frame by means of calculation according to the current frame, the decompressed current frame, and the decompressed preceding frame includes:
calculating a difference between the current frame and the decompressed current frame; and
multiplying the difference by an adjustment factor, and adding a result of the multiplication and the decompressed preceding frame to obtain the compensated preceding frame, where the adjustment factor is used to indicate an adjustment amplitude of the difference, and a value of the adjustment factor is from 0 to 1.

With reference to the third aspect or the first implementation of the first aspect, in a second implementation of the third aspect, the determining, according to the decompressed current frame and the decompressed preceding frame, whether the current frame correlates with a preceding frame includes:
calculating a value of correlation between the decompressed current frame and the decompressed preceding frame; and
comparing the value of correlation with a preset correlation threshold, where
if the value of correlation is greater than the correlation threshold, the current frame correlates with the preceding frame, or otherwise, the current frame does not correlate with the preceding frame.

With reference to the third aspect, or the first or the second implementation of the third aspect, in a third implementation of the third aspect, the display driving method further includes:
when the current frame does not correlate with the preceding frame, transferring a grayscale value of a pixel in the current frame to a liquid crystal display panel for display.

With reference to the third aspect, or the first or the second implementation of the third aspect, in a fourth implementation of the third aspect, the display driving method further includes:
obtaining a compression error of the current frame by calculating the difference between the current frame and the decompressed current frame;
comparing the compression error of the current frame with an error threshold; and
when the current frame does not correlate with the preceding frame, the current frame is dynamic relative to the preceding frame, and the compression error is greater than the error threshold, transferring a grayscale value of a pixel in the current frame to a liquid crystal display panel for display; or
when the current frame does not correlate with the preceding frame, the current frame is dynamic relative to the preceding frame, and the compression error is not greater than the error threshold, determining an overdrive value according to the decompressed preceding frame and the current frame.

With reference to the third aspect, or the first, the second, the third, or the fourth implementation of the third aspect, in a fifth implementation of the third aspect, the display driving method further includes:
when the current frame is static relative to the preceding frame, transferring the grayscale value of the pixel in the current frame to the liquid crystal display panel for display.

With reference to the third aspect, in a sixth implementation of the third aspect, the determining an overdrive value according to the compensated preceding frame and the current frame includes:
determining, by querying a lookup table circuit, an overdrive value corresponding to two grayscale values of a pixel in the compensated preceding frame and the current frame.

With reference to the fourth implementation of the third aspect, in a seventh implementation of the third aspect, the determining an overdrive value according to the decompressed preceding frame and the current frame includes:
determining, by querying a lookup table circuit, an overdrive value corresponding to two grayscale values of a pixel in the decompressed preceding frame and the current frame.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of a display driving apparatus in the prior art;
FIG. 2 is a schematic flowchart of a display driving method in the prior art;
FIG. 3 is a schematic structural diagram of a display driving apparatus according to an embodiment of the present invention;
FIG. 4A is a schematic structural diagram of a data selection unit in a display driving apparatus according to an embodiment of the present invention;
FIG. 4B is another schematic structural diagram of a data selection unit in a display driving apparatus according to an embodiment of the present invention;
FIG. 5 is a schematic structural diagram of a correlation determining unit in a display driving apparatus according to an embodiment of the present invention;
FIG. 6 is a schematic structural diagram of a display apparatus according to an embodiment of the present invention;
FIG. 7 is a schematic flowchart of a display driving method according to an embodiment of the present invention; and
FIG. 8 is a schematic flowchart of a display driving method according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

Terms involved in the embodiments of the present invention are first described.

A current frame (ORG_F2) is a non-compressed current original frame.

A compressed current frame (COM_F2) is a frame formed after compressing a current frame.

A decompressed current frame (DEC_F2) is a frame formed after decompressing a compressed current frame.

A preceding frame (ORG_F1) is a preceding frame of a current frame instead of a preceding frame of another frame.

A compressed preceding frame (COM_F1) is a frame formed after compressing a preceding frame.

A decompressed preceding frame (DEC_F1) is a frame formed after decompressing a compressed preceding frame.

The following describes in detail the embodiments provided in the present invention.

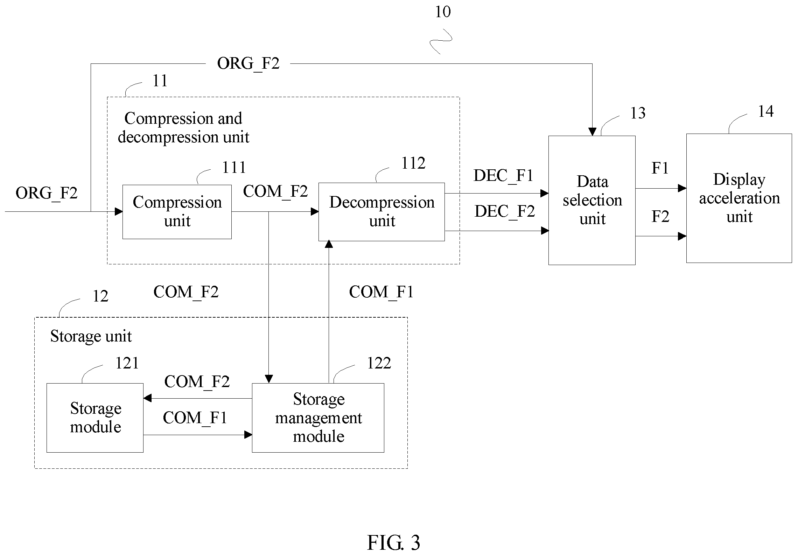

FIG. 3 is a schematic structural diagram of a display driving apparatus 10 according to an embodiment of the present invention. The display driving apparatus 10 includes a compression and decompression unit 11, a storage unit 12, a data selection unit 13, and a display acceleration unit 14. Specifically, functions and structures of the foregoing units are as follows:

The compression and decompression unit 11 is configured to: receive a current frame ORG_F2, compress the current frame ORG_F2 to obtain a compressed current frame COM_F2, and transfer the compressed current frame COM F2 to the storage unit 12 for storage.

The compression and decompression unit 11 is further configured to: decompress the compressed current frame COM_F2 to obtain a decompressed current frame DEC_F2, decompress a compressed preceding frame COM_F1 obtained from the storage unit 12 to obtain a decompressed preceding frame DEC_F1, and send the decompressed current frame DEC_F2 and the decompressed preceding frame DEC_F1 to the data selection unit 13.

Further, the compression and decompression unit 11 includes a compression unit 111 and a decompression unit 112.

The compression unit 111 is configured to: receive the current frame ORG_F2, compress the current frame ORG_F2 to obtain the compressed current frame COM_F2, send the compressed current frame COM F2 to the decompression unit 112, and send the compressed current frame COM_F2 to the storage unit 12 for storage.

The decompression unit 112 is configured to: receive the compressed current frame COM_F2 sent by the compression unit 111, decompress the compressed current frame COM_F2 to obtain the decompressed current frame DEC_F2, decompress the compressed preceding frame COM_F1 obtained from the storage unit 12 to obtain the decompressed preceding frame DEC_F, and send the decompressed current frame DEC_F2 and the decompressed preceding frame DEC_F1 to the data selection unit 13.

The storage unit 12 is configured to store a frame compressed by the compression and decompression unit 11. The frame specifically includes the compressed current frame COM_F2 and the compressed preceding frame COM_F1.

Further, the storage unit 12 includes a storage module 121 and a storage management module 122. The storage module 121 is configured to store a compressed frame. The compressed frame includes the compressed current frame COM F2 and the compressed preceding frame COM_F1. The storage management module 122 is configured to perform storage management, so as to control writing of the compressed frame into the storage module 121 or reading of the compressed frame from the storage module 121.

The data selection unit 13 is configured to: receive the current frame ORG_F2, the decompressed current frame DEC_F2, and the decompressed preceding frame DEC_F1, determine a result of correlation between the current frame ORG_F2 and a preceding frame ORG_F1 and frame status information of the current frame ORG_F2 relative to the preceding frame ORG_F1, and when the result of correlation is that the current frame correlates with the preceding frame, and the frame status information is a dynamic state, obtain a compensated preceding frame by means of calculation according to the current frame ORG_F2, the decompressed current frame DEC_F2, and the decompressed preceding frame DEC_F1, use the compensated preceding frame as a first frame, and use the current frame ORG_F2 as a second frame.

It should be noted that a difference between the compensated preceding frame obtained by means of calculation and the actual preceding frame is allowed.

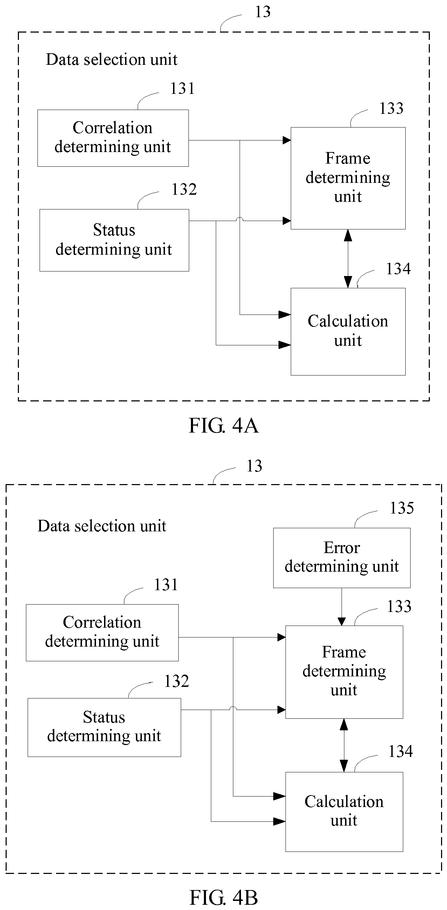

FIG. 4A is a structural diagram of the data selection unit 13 according to an embodiment of the present invention. The data selection unit 13 includes a correlation determining unit 131, a status determining unit 132, a calculation unit 134, and a frame determining unit 133.

The correlation determining unit 131 is configured to determine the result of correlation between the current frame ORG_F2 and the preceding frame ORG_F1 according to the decompressed current frame DEC_F2 and the decompressed preceding frame DEC_F1. The result of correlation is that the current frame correlates with the preceding frame or the current frame does not correlate with the preceding frame.

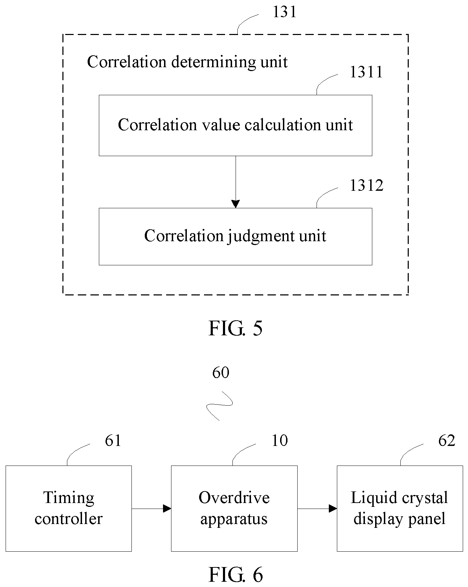

A structure of the correlation determining unit 131 is shown in FIG. 5. The correlation determining unit 131 includes a correlation value calculation unit 1311 and a correlation judgment unit 1312.

The correlation value calculation unit 1311 is configured to calculate a value of correlation between the decompressed current frame DEC_F2 and the decompressed preceding frame DEC_F1. The value of correlation is used to indicate a degree of correlation between the current frame ORG_F2 and the preceding frame ORG_F1, and a larger value of correlation indicates a higher correlation between the frames.

Preferably, the following provides a method for calculating the value of correlation by the correlation value calculation unit 1311: 1. Statistics about a distribution status of values of pixels in the current frame ORG_F2 and statistics about a distribution status of values of pixels in the preceding frame ORG_F1 are separately collected. 2. A value of correlation between the current frame ORG_F2 and the preceding frame ORG_F1 is calculated according to the distribution status of the values of the pixels in the current frame ORG_F2 and the distribution status of the values of the pixels in the preceding frame ORG_F1.

It should be noted that the method for calculating the value of correlation by the correlation value calculation unit 1311 is not specifically limited in the present invention. For a person skilled in the art, a value of correlation between two frames is calculated in multiple implementation methods.

The correlation judgment unit 1312 is configured to compare the value of correlation calculated by the correlation value calculation unit 1311 with a preset correlation threshold to obtain the result of correlation. If the value of correlation is greater than the correlation threshold, the result of correlation is that the current frame correlates with the preceding frame, or otherwise, the result of correlation is that the current frame does not correlate with the preceding frame. The correlation threshold is preset. In addition, different correlation thresholds may be set in different correlation value calculation methods. This is not specifically limited in the present invention.

The status determining unit 132 is configured to compare the decompressed current frame DEC_F2 with the decompressed preceding frame DEC_F1 to determine the frame status information of the current frame ORG_F2 relative to the preceding frame DEC_F1. The frame status information is a dynamic state or a static state.

The calculation unit 134 is configured to: when the result of correlation determined by the correlation determining unit 131 is that the current frame correlates with the preceding frame, and the frame status information determined by the status determining unit 132 is a dynamic state, calculate a difference between the current frame ORG_F2 and the decompressed current frame DEC_F2, multiply the difference by an adjustment factor, and add a result of the multiplication and the decompressed preceding frame DEC_F1 to obtain the compensated preceding frame. The adjustment factor is used to indicate an adjustment amplitude of the difference, a value of the adjustment factor is from 0 to 1, and in a process of calculating the compensated preceding frame, the value of the adjustment factor is an empirical value.

The frame determining unit 133 is configured to: when the result of correlation determined by the correlation determining unit 131 is that the current frame correlates with the preceding frame, and the frame status information determined by the status determining unit 132 is a dynamic state, use the compensated preceding frame obtained by the calculation unit 134 as the first frame, and use the current frame ORG_F2 as the second frame.

Optionally, the frame determining unit 133 is further configured to:
when the result of correlation determined by the correlation determining unit 131 is that the current frame does not correlate with the preceding frame, directly and separately use the current frame ORG_F2 as the first frame and the second frame.

Optionally, the frame determining unit 133 is further configured to:
when the frame status information determined by the correlation determining unit 131 is a static state, directly and separately use the current frame ORG F2 as the first frame and the second frame.

FIG. 4B is a structural diagram of the data selection unit 13 according to another embodiment of the present invention. The data selection unit 13 includes a correlation determining unit 131, a status determining unit 132, a calculation unit 134, a frame determining unit 133, and an error determining unit 135. Functions of the correlation determining unit 131, the status determining unit 132, and the calculation unit 134 are the same as functions of corresponding units described in the embodiment corresponding to FIG. 4A, and details are not described herein again.

The embodiment corresponding to FIG. 4B differs from the embodiment corresponding to FIG. 4A in that the error determining unit 135 is added. Specifically, the error selection unit 135 is configured to obtain a compression error by calculating the difference between the current frame ORG_F2 and the decompressed current frame DEC_F2, and compare the compression error with an error threshold to obtain an error result. The error result is that the compression error is greater than the error threshold or the compression error is not greater than the error threshold.

Because the error determining unit 135 is added in the embodiment corresponding to FIG. 4B, a function of the frame determining unit 133 in FIG. 4B is different from a function of the frame determining unit 133 in FIG. 4A. A difference is mainly reflected in the following:

When the result of correlation determined by the correlation determining unit 131 is that the current frame does not correlate with the preceding frame, the frame determining unit 133 in FIG. 4B needs to further perform a different process with reference to the frame status information determined by the status determining unit 132 and the error result determined by the error determining unit 135, while the frame determining unit in FIG. 4A directly and separately uses the current frame as the first frame and the second frame.

Specifically, when the result of correlation determined by the correlation determining unit 131 is that the current frame does not correlate with the preceding frame, the frame status information determined by the status determining unit 132 is a dynamic state, and the error result determined by the error determining unit 135 is that the compression error is greater than the error threshold, the frame determining unit 133 separately uses the current frame ORG F2 as the first frame and the second frame.

Alternatively, when the result of correlation determined by the correlation determining unit 131 is that the current frame does not correlate with the preceding frame, the frame status information determined by the status determining unit 132 is a dynamic state, and the error result determined by the error determining unit 135 is that the compression error is not greater than the error threshold, the frame determining unit 133 uses the decompressed preceding frame DEC_F1 as the first frame, and uses the current frame ORG_F2 as the second frame.

In addition, when the result of correlation determined by the correlation determining unit 131 is that the current frame correlates with the preceding frame, and the frame status information determined by the status determining unit 132 is a dynamic state, and when the frame status information determined by the correlation determining unit 131 is a static state, a function implemented by the frame determining unit 133 in FIG. 4B is the same as a function implemented by the frame determining unit 134 in FIG. 4A.

After the data selection unit 13 determines the first frame and the second frame, the data selection unit 13 is further configured to send the first frame and the second frame to the display acceleration unit 14.

The display acceleration unit 14 is configured to determine an overdrive value according to the received first frame and second frame.

Specifically, when the first frame and the second frame are different frames, the display acceleration unit 14 obtains, by querying a lookup table circuit, an overdrive value corresponding to two grayscale values of a pixel in the first frame and the second frame. The lookup table circuit is configured to determine, according to two grayscale values of a pixel in the first frame and the second frame, an overdrive value corresponding to the pixel. In addition, it may be learned from the foregoing description that, that the first frame and the second frame are different frames includes the following two cases: 1. The first frame is the compensated preceding frame, and the second frame is the current frame ORG_F2. 2. The first frame is the decompressed preceding frame DEC_F1, and the second frame is the current frame ORG_F2.

The display acceleration unit 14 is further configured to transfer the determined overdrive value to a liquid crystal display panel for display, and use the determined overdrive value as a grayscale value of a displayed pixel.

Further, when the first frame and the second frame are same frames, the display acceleration unit 14 does not need to determine the overdrive value by querying the lookup table circuit, but directly transfers a grayscale value of a pixel in the current frame ORG_F2 to the liquid crystal display panel for display. This case is the case in which an overdrive mechanism is not executed as mentioned in the background. In addition, it may be learned from the foregoing description that when the first frame and the second frame are same frames, both the first frame and the second frame are the current frame.

In the foregoing embodiment, when the data selection unit determines that a current frame correlates with a preceding frame, and the current frame is dynamic relative to the preceding frame, a compensated preceding frame is obtained by means of calculation, and an overdrive value is determined according to the compensated preceding frame and the current frame. No compression error is involved in an overdrive value determining process, that is, when the compression error is not considered, an overdrive mechanism may be still used to determine a grayscale value of a displayed pixel. Therefore, display quality of a dynamic image is improved.

The display driving apparatus provided in this embodiment of the present invention is used as a hardware apparatus. All units of the display driving apparatus are hardware units, and some units may be implemented by circuits. The display driving apparatus may be used as a separate chip, and is connected to a timing controller (Timing Controller, TCON), or may be integrated in a TCON. Whether the display driving apparatus is integrated in a TCON is not limited in the present invention.

FIG. 6 describes a display apparatus 60 according to an embodiment of the present invention. The display apparatus includes a TCON 61, a display driving apparatus 10, and a liquid crystal display panel 62.

The TCON 61 is configured to: generate a current frame, and send the current frame to the display driving apparatus 10.

The display driving apparatus 10 is configured to: receive the current frame, generate an overdrive value, and send the overdrive value to the liquid crystal display panel 62. Specifically, for a structure of the display driving apparatus 10 and a function of each unit included therein, refer to the description of the overdrive apparatus 10 in the foregoing embodiment. In this embodiment, the display driving apparatus 10 is not described in detail.

The liquid crystal display panel 62 is configured to receive the overdrive value sent by the display driving apparatus 10, and display the overdrive value.

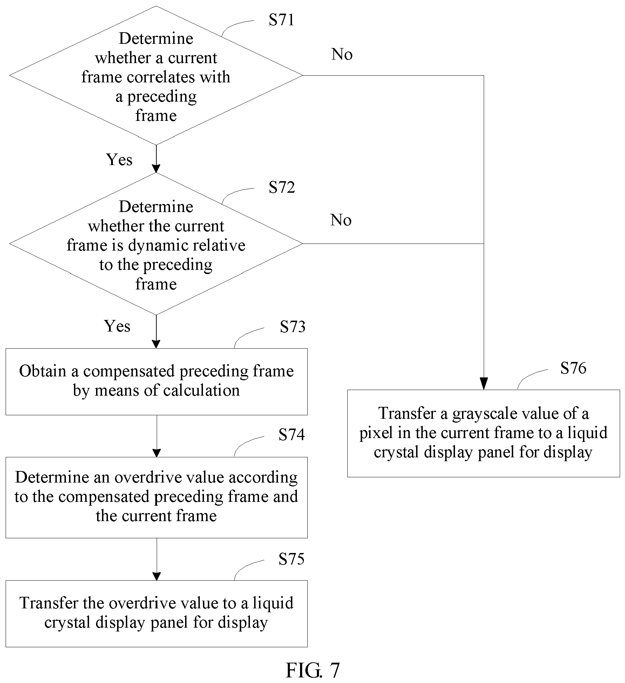

FIG. 7 is a schematic flowchart of a display driving method according to an embodiment of the present invention. The display driving method is performed by a display driving apparatus. It should be noted that, before step S71 in FIG. 7, the display driving method includes the following steps: 1. obtaining a current frame and a compressed preceding frame. 2. compressing the current frame to obtain a compressed current frame. 3. separately decompressing the compressed current frame and the compressed preceding frame to obtain a decompressed current frame and a decompressed preceding frame. Because the foregoing steps performed before step S71 exist in an entire display driving execution process, the steps are not shown in FIG. 7.

S71. Determine whether the current frame correlates with the preceding frame.

When the current frame correlates with the preceding frame, S72 is performed; otherwise, S76 is performed.

Specifically, whether the current frame correlates with the preceding frame is determined according to the decompressed current frame and the decompressed preceding frame.

Further, that whether the current frame correlates with the preceding frame is determined according to the decompressed current frame and the decompressed preceding frame includes:
calculating a value of correlation between the decompressed current frame and the decompressed preceding frame, where the value of correlation is used to indicate a degree of correlation between the current frame and the preceding frame, and a larger value of correlation indicates a higher correlation between the frames; and
comparing the value of correlation with a preset correlation threshold, where if the value of correlation is greater than the correlation threshold, the current frame correlates with the preceding frame, or otherwise, the current frame does not correlate with the preceding frame.

Preferably, the following provides a method for calculating the value of correlation between the decompressed current frame and the decompressed preceding frame: 1. Statistics about a distribution status of values of pixels in the current frame and statistics about a distribution status of values of pixels in the preceding frame are separately collected. 2. A value of correlation between the current frame and the preceding frame is calculated according to the distribution of the values of the pixels in the current frame and the distribution of the values of the pixels in the preceding frame.

It should be noted that the method for calculating the value of correlation is not specifically limited in the present invention. In addition, different correlation thresholds may be used in different correlation value calculation methods. The correlation threshold is a preset value.

S72. Determine whether the current frame is dynamic relative to the preceding frame.

Specifically, the decompressed current frame is compared with the decompressed preceding frame to determine whether the current frame is dynamic relative to the preceding frame.

When the current frame is dynamic relative to the preceding frame, S73 is performed; otherwise, that is, when the current frame is static relative to the preceding frame, S76 is performed.

S73. Obtain a compensated preceding frame by means of calculation.

Specifically, the compensated preceding frame is obtained by means of calculation according to the current frame, the decompressed current frame, and the decompressed preceding frame. Further, a specific calculation method includes:
calculating a difference between the current frame and the decompressed current frame; and
multiplying the difference by an adjustment factor, and adding a result of the multiplication and the decompressed preceding frame to obtain the compensated preceding frame, where the adjustment factor is used to indicate an adjustment amplitude of the difference, and a value of the adjustment factor is from 0 to 1.

S74. Determine an overdrive value according to the compensated preceding frame and the current frame.

Specifically, an overdrive value corresponding to two grayscale values of a pixel in the compensated preceding frame and the current frame is determined by querying a lookup table circuit.

S75. Transfer the overdrive value to a liquid crystal display panel for display.

In S75, the determined overdrive value is used as a grayscale value of a displayed pixel.

S76. Transfer a grayscale value of a pixel in the current frame to a liquid crystal display panel for display.

In this embodiment, when it is determined that a current frame correlates with a preceding frame, and the current frame is dynamic relative to the preceding frame, a compensated preceding frame is obtained by means of calculation, and an overdrive value is determined according to the compensated preceding frame and the current frame. No compression error is involved in an overdrive value determining process, that is, when the compression error is not considered, an overdrive mechanism may be still used to determine a grayscale value of a displayed pixel. Therefore, display quality of a dynamic image is improved.

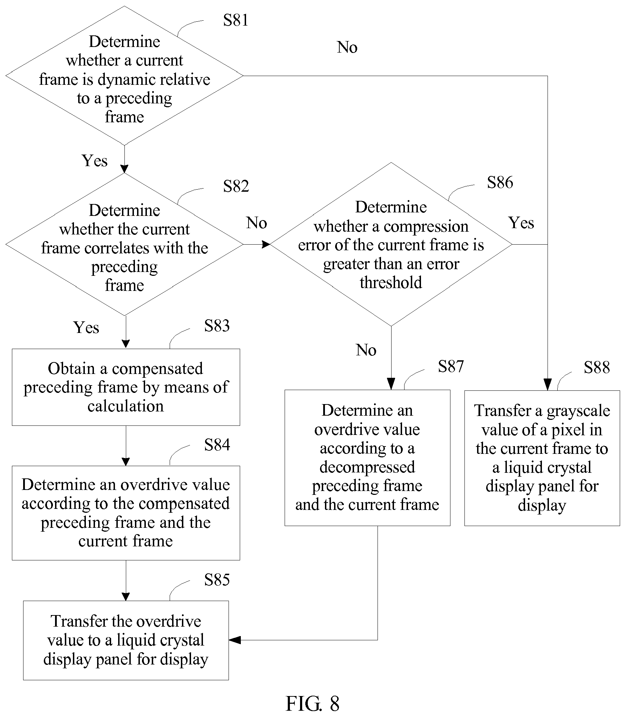

FIG. 8 is a schematic flowchart of a display driving method according to another embodiment of the present invention. The display driving method is performed by a display driving apparatus. It should be noted that, before step S81 in FIG. 8, the display driving method performs the following steps: 1. receiving a current frame and a compressed preceding frame. 2. compressing the current frame to obtain a compressed current frame. 3. separately decompressing the compressed current frame and the compressed preceding frame to obtain a decompressed current frame and a decompressed preceding frame. Because the foregoing steps performed before step S81 exist in an entire display driving execution process, the steps are not shown in FIG. 8.

S81. Determine whether the current frame is dynamic relative to the preceding frame.

When the current frame is dynamic relative to the preceding frame, S82 is performed; otherwise, that is, when the current frame is static relative to the preceding frame, S88 is performed.

For how to determine whether the current frame is dynamic relative to the preceding frame, refer to the method provided in the foregoing embodiment. Details are not described in this embodiment.

S82. Determine whether the current frame correlates with the preceding frame.

When the current frame correlates with the preceding frame, S83 is performed; otherwise, that is, when the current frame does not correlate with the preceding frame, S86 is performed.

For how to determine whether the current frame correlates with the preceding frame, refer to the method provided in the foregoing embodiment. Details are not described in this embodiment.

S83. Obtain a compensated preceding frame by means of calculation.

S84. Determine an overdrive value according to the compensated preceding frame and the current frame.

S85. Transfer the overdrive value to a liquid crystal display panel for display.

In S85, the determined overdrive value is used as a grayscale value of a displayed pixel.

A process of performing S83 to S85 is the same as a process of performing S73 to S75 in FIG. 7, and details are not described herein again.

S86. Determine whether a compression error of the current frame is greater than an error threshold.

When the compression error of the current frame is not greater than the error threshold, S87 is performed; otherwise, S88 is performed.

S87. Determine an overdrive value according to a decompressed preceding frame and the current frame.

Specifically, an overdrive value corresponding to two grayscale values of a pixel in the decompressed preceding frame and the current frame is determined by querying a lookup table circuit.

S88. Transfer a grayscale value of a pixel in the current frame to a liquid crystal display panel for display.

In this embodiment, when it is determined that a current frame correlates with a preceding frame, and the current frame is dynamic relative to the preceding frame, a compensated preceding frame is obtained by means of calculation, and an overdrive value is determined according to the compensated preceding frame and the current frame. No compression error is involved in an overdrive value determining process, that is, when the compression error is not considered, an overdrive mechanism may be still used to determine a grayscale value of a displayed pixel. Therefore, display quality of a dynamic image is improved.

In the several embodiments provided in this application, it should be understood that the disclosed system, apparatus, and method may be implemented in other manners. For example, the described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A display driving apparatus, comprising:
a compression and decompression unit, configured to: receive a current frame, compress the current frame to obtain a compressed current frame, and send the compressed current frame to a storage unit, and further configured to: separately decompress the compressed current frame and a compressed preceding frame that is obtained from the storage unit, to obtain a decompressed current frame and a decompressed preceding frame; and send the decompressed current frame and the decompressed preceding frame to a data selection unit;
the storage unit, configured to store the compressed current frame and the compressed preceding frame;
the data selection unit, configured to: receive the current frame, the decompressed current frame, and the decompressed preceding frame, determine a result of correlation between the current frame and a preceding frame and frame status information of the current frame relative to the preceding frame, and when the result of correlation is that the current frame correlates with the preceding frame, and the frame status information is a dynamic state, obtain a compensated preceding frame by means of calculation according to the current frame, the decompressed current frame, and the decompressed preceding frame, use the compensated preceding frame as a first frame, and use the current frame as a second frame, wherein
the data selection unit is further configured to send the first frame and the second frame to a display acceleration unit; and
the display acceleration unit, configured to determine an overdrive value according to the first frame and the second frame.

2. The display driving apparatus according to claim 1, wherein the data selection unit comprises:
a correlation determining unit, configured to determine the result of correlation between the current frame and the preceding frame according to the decompressed current frame and the decompressed preceding frame, wherein the result of correlation is that the current frame correlates with the preceding frame or the current frame does not correlate with the preceding frame;
a status determining unit, configured to compare the decompressed current frame with the decompressed preceding frame to determine the frame status information, wherein the frame status information is a dynamic state or a static state;
a calculation unit, configured to: when the result of correlation determined by the correlation determining unit is that the current frame correlates with the preceding frame, and the frame status information determined by the status determining unit is a dynamic state, calculate a difference between the current frame and the decompressed current frame, multiply the difference by an adjustment factor, and add a result of the multiplication and the decompressed preceding frame to obtain the compensated preceding frame, wherein the adjustment factor is used to indicate an adjustment amplitude of the difference, and a value of the adjustment factor is from 0 to 1; and
a frame determining unit, configured to: when the result of correlation determined by the correlation determining unit is that the current frame correlates with the preceding frame, and the frame status information determined by the status determining unit is a dynamic state, use the compensated preceding frame obtained by the calculation unit as the first frame, and use the current frame as the second frame.

3. The display driving apparatus according to claim 2, wherein the correlation determining unit comprises:
a correlation value calculation unit, configured to calculate a value of correlation between the decompressed current frame and the decompressed preceding frame; and
a correlation judgment unit, configured to compare the value of correlation calculated by the correlation value calculation unit with a preset correlation threshold to obtain the result of correlation, wherein if the value of correlation is greater than the correlation threshold, the result of correlation is that the current frame correlates with the preceding frame, or otherwise, the result of correlation is that the current frame does not correlate with the preceding frame.

4. The display driving apparatus according to claim 2 or 3, wherein the frame determining unit is further configured to:
when the result of correlation determined by the correlation determining unit is that the current frame does not correlate with the preceding frame, separately use the current frame as the first frame and the second frame.

5. The display driving apparatus according to claim 2 or 3, wherein the data selection unit further comprises an error determining unit, wherein
the error determining unit is configured to obtain a compression error by calculating the difference between the current frame and the decompressed current frame, and compare the compression error with an error threshold to obtain an error result, wherein the error result is that the compression error is greater than the error threshold or the compression error is not greater than the error threshold; and
the frame determining unit is further configured to:
when the result of correlation determined by the correlation determining unit is that the current frame does not correlate with the preceding frame, the frame status information determined by the status determining unit is a dynamic state, and the error result determined by the error determining unit is that the compression error is greater than the error threshold, separately use the current frame as the first frame and the second frame; or
when the result of correlation determined by the correlation determining unit is that the current frame does not correlate with the preceding frame, the frame status information determined by the status determining unit is a dynamic state, and the error result determined by the error determining unit is that the compression error is not greater than the error threshold, use the decompressed preceding frame as the first frame, and use the current frame as the second frame.

6. The display driving apparatus according to any one of claims 2 to 5, wherein the frame determining unit is further configured to:
when the frame status information determined by the status determining unit is a static state, separately use the current frame as the first frame and the second frame.

7. The display driving apparatus according to any one of claims 1 to 6, wherein the display acceleration unit comprises a lookup table circuit, and the lookup table circuit is configured to determine, according to two grayscale values of a pixel in the first frame and the second frame, an overdrive value corresponding to the pixel.

8. A display apparatus, comprising the display driving apparatus according to any one of claims 1 to 7 and a liquid crystal display panel, wherein
the liquid crystal display panel is configured to receive an overdrive value sent by the display driving apparatus, and display the overdrive value.

9. The display apparatus according to claim 8, further comprising:
a timing controller TCON, configured to generate a current frame, and send the current frame to the display driving apparatus.

10. A display driving method, comprising:
obtaining a current frame and a compressed preceding frame;
compressing the current frame to obtain a compressed current frame;
separately decompressing the compressed current frame and the compressed preceding frame to obtain a decompressed current frame and a decompressed preceding frame;
determining, according to the decompressed current frame and the decompressed preceding frame, whether the current frame correlates with a preceding frame;
when the current frame correlates with the preceding frame, and the current frame is dynamic relative to the preceding frame, obtaining a compensated preceding frame by means of calculation according to the current frame, the decompressed current frame, and the decompressed preceding frame; and
determining an overdrive value according to the compensated preceding frame and the current frame.

11. The display driving method according to claim 10, wherein the obtaining a compensated preceding frame by means of calculation according to the current frame, the decompressed current frame, and the decompressed preceding frame comprises:
calculating a difference between the current frame and the decompressed current frame; and
multiplying the difference by an adjustment factor, and adding a result of the multiplication and the decompressed preceding frame to obtain the compensated preceding frame, wherein the adjustment factor is used to indicate an adjustment amplitude of the difference, and a value of the adjustment factor is from 0 to 1.

12. The display driving method according to claim 10 or 11, wherein the determining, according to the decompressed current frame and the decompressed preceding frame, whether the current frame correlates with a preceding frame comprises:
calculating a value of correlation between the decompressed current frame and the decompressed preceding frame; and
comparing the value of correlation with a preset correlation threshold, wherein
if the value of correlation is greater than the correlation threshold, the current frame correlates with the preceding frame, or otherwise, the current frame does not correlate with the preceding frame.

13. The display driving method according to any one of claims 10 to 12, further comprising:
when the current frame does not correlate with the preceding frame, transferring a grayscale value of a pixel in the current frame to a liquid crystal display panel for display.

14. The display driving method according to any one of claims 10 to 12, further comprising:
obtaining a compression error of the current frame by calculating the difference between the current frame and the decompressed current frame;
comparing the compression error of the current frame with an error threshold; and
when the current frame does not correlate with the preceding frame, the current frame is dynamic relative to the preceding frame, and the compression error is greater than the error threshold, transferring a grayscale value of a pixel in the current frame to a liquid crystal display panel for display; or
when the current frame does not correlate with the preceding frame, the current frame is dynamic relative to the preceding frame, and the compression error is not greater than the error threshold, determining an overdrive value according to the decompressed preceding frame and the current frame.

15. The display driving method according to any one of claims 10 to 14, further comprising:
when the current frame is static relative to the preceding frame, transferring the grayscale value of the pixel in the current frame to the liquid crystal display panel for display.

16. The display driving method according to claim 10, wherein the determining an overdrive value according to the compensated preceding frame and the current frame comprises:
determining, by querying a lookup table circuit, an overdrive value corresponding to two grayscale values of a pixel in the compensated preceding frame and the current frame.

17. The display driving method according to claim 14, wherein the determining an overdrive value according to the decompressed preceding frame and the current frame comprises:
determining, by querying a lookup table circuit, an overdrive value corresponding to two grayscale values of a pixel in the decompressed preceding frame and the current frame.
